# FASCICULE DE BREVET EUROPEEN

(11) **EP 1 888 602 B1**
(45) Date de publication et mention de la délivrance du brevet: **10.07.2019**
(21) Numéro de dépôt: 06755495.6
(22) Date de dépôt: 17.05.2006
(51) Int. Cl.: C07F 7/18

(54) **PROCEDE DE PREPARATION DES COMPOSES ORGANOSILICIQUES**
HERSTELLUNGSVERFAHREN FÜR SILICIUMORGANISCHE VERBINDUNGEN
PREPARATION METHOD FOR ORGANOSILICIUM COMPOUNDS

(30) Priorité: 26.05.2005 FR 0505284
(43) Date de publication de la demande: 20.02.2008
(73) Titulaire: RHODIA CHIMIE, 93300 Aubervilliers (FR)
(72) Inventeur: STERIN, Sébastien, F-69450 Saint Cyr au Mont d'Or (FR)
(74) Mandataire: Ferri, Isabella
(86) Numéro de dépôt international: PCT/FR2006/001109
(87) Numéro de publication internationale: WO 2006/125889

(56) Documents cités:
- US-A- 4 118 367
- MITCHELL, H.; LEBLANC, Y.: "Amination of Arenes with Electron-Deficient Azodicarboxylates" J.ORG.CHEM., vol. 59, 1994, pages 682-687, XP002363174
- DAWES, K.; ROWLEY, R.J.: "Chemical modification of natural rubber-a new silane coupling agent" PLASTICS AND RUBBER: MATERIALS AND APPLICATIONS, vol. 3, no. 1, 1978, pages 23-26, XP009060017
- DAWES, K.; ROWLEY, R.J.: "chemical Modifications of Natural Rubber-A New Silane Coupling Agent" RUBBERCON '77, 1977, pages 18.1-18.11, XP009060018

## Description

Le domaine de l'invention est celui de la synthèse de composés organosiliciques (e.g. azo-alcoxysilanes).

Les composés organosiliciques plus spécialement concernés par l'invention sont ceux comprenant au moins un groupe azo activé. Cette activation peut résulter, par exemple, de la présence de groupements carbonyle voisins des azotes. La partie organosilicique de ces composés peut comprendre par exemple des groupements hydrolysables ou condensables de type ≡SiOR ou ≡SiOH.

De tels composés organosiliciques à groupe(s) azo activé(s) disponibles (comme par exemple ceux à groupe -CO-N=N-CO-) sont très utiles, notamment dans la synthèse de molécules organiques actives (par exemple hétérocycles azotés) utilisables dans les domaines de l'agrochimie et de la pharmacie, par exemple en tant que diénophiles en réaction d'hétéro-Diels Alder.

Cependant, peu de ces composés sont accessibles en particulier en raison de leur préparation difficile. Il serait donc souhaitable de pouvoir élargir la palette des composés organosiliciques disponibles.

Dans un art antérieur peu fourni, on relève la demande de brevet FR-A-2340323, qui divulgue des composés organosiliciques de formule (I*) :

Y-X-CO-N=N-CO-X¹-Z*

dans laquelle X et X¹ sont identiques ou différents et représentent chacun un groupement imino, un atome d'oxygène ou un groupement méthylène substitué ou non substitué ; Y est un groupement alkyle, aryle ou aralkyle substitué ou non, ou est identique à Z* ; Z* est un groupement alkyle, aryle ou aralkyle qui présente comme substituant au moins un groupe silane de formule Si(OR)₃ ou OSi(OR)₃ dans laquelle R est un groupement alkyle à chaîne droite ou ramifiée, de préférence avec 1 à 6 atomes de carbone.

Des composés organosiliciques de formule (II*) & (III*) :

(II*) : R^{1*}-O-CO-N=N-CO-NH-(C₆H₆)-(CH₂)ₘ-Si(OR^{2*})₃

(III*) : R^{1*}-O-CO-N=N-CO-NH-(CH₂)ₙ₋Si(OR^{2*})₃

dans lesquelles R^{1*} et R^{2*} sont identiques ou différents et représentent chacun un groupement alkyle à chaîne droite ou ramifiée contenant de préférence entre 1 et 6 atomes de carbone, m est égal à 0, 1, 2 ou 3 et n est égal à 1, 2 ou 3, sont cités.

Un composé de formule Ethyl-O-CO-N=N-CO-NH-(CH₂)₃-Si(OEthyl)₃, conforme à la formule (III*), est divulgué dans l'exemple 3.

L'étape clé de la synthèse de ce type de composés organosiliciques à groupe azo activé réside dans l'oxydation d'une groupement de type hydrazo (NH-NH) en groupement azo (N=N) correspondante.

Selon FR-A-2340323, cette transformation est effectuée à l'aide d'un système oxydant comprenant un oxydant formé par un dérivé halogéné et une base de type pyridine. Ce type de base présente l'inconvénient de conduire à des produits contenant des résidus pyridiniques dont la présence est pénalisante pour la qualité du produit final, notamment d'une part, en termes d'hygiène industrielle et d'écotoxicité, et, d'autre part, en termes de performances dans les applications.

En outre, les composés organosiliciques selon la demande FR-A-2340323 ont pour inconvénient de comprendre trois fonctions Si-OR^{2*} hydrolysables par mole de silicium et susceptibles de libérer des quantités non négligeables d'alcool, lors d'un stockage en milieu humide. Cette production d'alcool est d'autant plus embarrassante que, la plupart du temps, les alcools produits sont des composés organiques volatils (COV) dangereux, en particulier du fait de leur toxicité et de leur inflammabilité.

Dans ce contexte, l'un des objectifs essentiels de la présente invention est de fournir un procédé perfectionné de préparation composés organosiliciques, ce procédé étant du type de ceux faisant intervenir l'oxydation des groupes hydrazo d'un précurseur en groupes azo, ce procédé ayant vocation à être plus performant en termes de productivité/rendement, plus économique, plus facile à mettre en oeuvre et conduisant à des composés organosiliciques exempts ou quasi-exempts d'impuretés indésirables.

Un autre objectif essentiel de la présente invention est de fournir un procédé perfectionné de préparation de composés organosiliciques performants dans leurs applications.

Un autre objectif essentiel de la présente invention est de fournir un procédé perfectionné de préparation de composés organosiliciques ne libérant pas de COV ou qui libérant des quantités réduites de COV, lors de leur stockage en atmosphère humide et/ou lors de leur mise en oeuvre.

Un autre objectif essentiel de la présente invention est de fournir un procédé perfectionné de préparation de composés organosiliciques permettant le contrôle de la production des espèces susceptibles de générer des COV, notamment lors d'un stockage en atmosphère humide.

L'objet de l'invention est formé par un procédé de préparation de composés organosiliciques comprenant un ou plusieurs composés, identiques ou différents entre eux, de formule (I) ci-après détaillée :

[(G⁰)₃SiO_{1/2}]ₘ[(G⁰)₂SiO_{2/2}]ₙ[G⁰SiO_{3/2}]ₒ[SiO_{4/2}]ₚ[(G²)ₐ(G¹)_{a'}(Z-CO-N=N-CO-A)SiO_{(3-a-a')/2}]_{q} (I)

dans laquelle :
- m, n, o, p représentent chacun un nombre entier ou fractionnaire égal ou supérieur à 0 ;
- q représente un nombre entier ou fractionnaire égal ou supérieur à 1 ;
- a représente un nombre entier choisi parmi 0,1, 2 et 3 ;
- a' représente un nombre entier choisi parmi 0, 1 et 2 ;
- la somme a + a' se situe dans l'intervalle allant de 0 à 3 avec les conditions selon lesquelles:
   -(Cl)-quand a = 0, alors :
      ⇒ soit au moins un des m, n, o, p est un nombre différent de 0 (zéro) et q est égal ou supérieur à 1 ;
      ⇒ soit q est supérieur à 1 et chacun des m, n, o, p a une valeur quelconque,
      ⇒ et au moins un des symboles G⁰ répond à la définition donnée ci-après pour G²;
   -(C2)- quand a + a' = 3, alors m = n = o = p = 0 (zéro);
- les symboles G⁰, identiques ou différents, représentent chacun l'un des groupes correspondant à G² ou G¹ ;
- les symboles G², identiques ou différents, représentent chacun : un groupe hydroxyle, un groupe monovalent hydrolysable ou deux G² forment ensemble et avec le silicium auquel ils sont liés, un cycle ayant 3 à 5 chaînons hydrocarbonés et pouvant comprendre au moins un hétéroatome, au moins l'un de ces chaînons pouvant également être un chaînon d'au moins un autre cycle hydrocarboné ou aromatique;
- les symboles G¹, identiques ou différents, représentent chacun : un groupe hydrocarboné aliphatique, saturé ou insaturé ; un groupe carbocyclique, saturé ou insaturé et/ou aromatique, monocyclique ou polycyclique ; ou un groupe représentant une partie hydrocarbonée aliphatique, saturée ou insaturée et une partie carbocyclique telle que définie ci-dessus ;
- le symbole Z représente un radical divalent choisi parmi : un groupe hydrocarboné aliphatique, saturé ou insaturé ; un groupe carbocyclique, saturé, insaturé et/ou aromatique, monocyclique ou polycyclique; et un groupe présentant une partie hydrocarbonée aliphatique, saturée ou insaturée et une partie carbocyclique telle que définie ci-dessus ; ledit radical divalent étant éventuellement substitué ou interrompu par un atome d'oxygène et/ou un atome de soufre et/ou un atome d'azote, ledit atome d'azote portant 1 groupe monovalent choisi parmi : un atome d'hydrogène ; un atome hydrocarboné aliphatique, saturé ou insaturé ; un groupe carbocyclique, saturé ou insaturé et/ou aromatique, monocyclique ou polycyclique ; et un groupe présentant une partie hydrocarbonée aliphatique, saturée ou insaturée et une partie carbocyclique telle que définie ci-dessus ;
- le symbole A représente :
   + un groupe hydrocarboné aliphatique, saturé ou insaturé ; un groupe carbocyclique, saturé ou insaturé et/ou aromatique, monocyclique ou polycyclique ; ou un groupe représentant une partie hydrocarbonée aliphatique, saturée ou insaturée et une partie carbocyclique telle que définie ci-dessus ;
   + un groupe -X-G³ où : X représente -O-, -S- ou -NG⁴- avec G⁴ prenant l'une quelconque des significations données ci-avant pour G¹ ; G³, identique ou différent de G⁴, représente l'un quelconques des groupes définis pour G¹ ; les substituants G³ et G⁴ du groupe -NG⁴G³ pouvant, en outre, former ensemble et avec l'atome d'azote auquel ils sont liés un cycle unique ayant de 5 à 7 chaînons, comportant dans le cycle 3 à 6 atomes de carbone, 1 ou 2 atome(s) d'azote et éventuellement 1 ou 2 double(s) liaison(s) insaturée(s) ;
   + ou, lorsque q = 1, un groupe [-Z-SiO_{(3-a-a')/2}(G²)ₐ(G¹)_{a'}][(G⁰)₃SiO_{1/2}]ₘ [(G⁰)₂SiO_{2/2}]ₙ[G⁰SiO_{3/2}]ₒ[SiO_{4/2}]ₚ dans lequel les symboles Z, G¹, G², a, a', m, n, o, et p possèdent les définitions indiquées ci-avant;
      ⇒ ce procédé étant du type de ceux consistant :
         ▪ à mettre en oeuvre au moins un précurseur (II) d'au moins un composé organosilicique (I), ledit précurseur répondant à la formule (II) suivante :

            [(G⁰)₃SiO_{1/2}]ₘ[(G⁰)₂SiO_{2/2}]ₙ[G⁰SiO_{3/2}]ₒ[SiO_{4/2}]ₚ[(G²)ₐ(G¹)_{a'}(Z-CO-HN-NH-CO-A)SiO_{(3-a-n')/2}]_{q} (II)

            dans laquelle les symboles G⁰, G¹, G², Z, A m,n,o,p, a, a' et q sont tels que définis ci-dessus en légende de la formule (I),
         ▪ à oxyder la groupement hydrazino du précurseur (II) en groupement azo propre au composé organosilicique (I), à l'aide d'un système oxydant comprenant au moins un oxydant (Ox) et au moins une base (B),
      ⇒ et ce procédé étant caractérisé en ce qu'il est notamment prévu :
         ▪ de sélectionner la base B parmi les bases minérales, de préférence parmi les bases minérales de formule (B): M₂CO₃ dans laquelle M est un métal - de préférence un métal alcalin-,
         ▪ de sélectionner Ox dans le groupe comprenant : le brome, l'hypochlorite de tertiobutyle, l'acide trichloroisocyanurique, le chlore et leurs mélanges ;
         ▪ et de faire intervenir un réactif supplémentaire choisi parmi les silanes (pris seuls ou en mélange entre eux) de formule (III) :

            (G^{o})₄₋ₚ₁Si(G^{2'})ₚ₁

            dans laquelle :
            * les symboles G^{o} identiques ou différents, représentent chacun : un groupe hydrocarboné aliphatique, saturé ou insaturé ; un groupe carbocyclique, saturé ou insaturé et/ou aromatique, monocyclique ou polycyclique; ou un groupe représentant une partie hydrocarbonée aliphatique, saturée ou insaturée et une partie carbocyclique telle que définie ci-dessus; ou un reste polysiloxane ;
            * les symboles G^{2'} étant identiques ou différents et représentant un groupement monovalent hydrolysable répondant à la même définition que celle donnée supra pour les symboles G² décrits en relation avec la formule (I),
            * p1 représente un nombre entier choisi parmi 1 et 2, de préférence 1.

Il est du mérite des inventeurs d'avoir combiné une sélection de bases B, une sélection d'Oxydants Ox et la mise en oeuvre d'un ou plusieurs alcoxysilanes, ce qui permet de s'affranchir de la pyridine comme base B. Cela simplifie considérablement la préparation des composés organosiliciques à groupements azo de formule (I), puisqu'il n'est pas nécessaire de réaliser un post-traitement d'élimination des résidus pyridiniques.

Ce résultat est atteint sans avoir porté atteinte aux performances du procédé (rendement / productivité), ni à la qualité du produit, tout en permettant au procédé de devenir plus économique.

En outre, ce procédé donne accès à de nouveaux produits constitués par un plusieurs composés organosiliciques à groupements azo de formule (I), à l'exclusion des composés organosiliciques de formule (I*) (II*) ou (III*) telles que définies ci-dessus, lorsque les composés considérés sont exclusivement constitués par des composés de formule (I) dans laquelle: a = 3, q = 1, m = n = o = p = 0 (zéro).

Les composés organosiliciques à groupements azo de formule (I) obtenus sont notamment ceux choisis dans le groupe des espèces suivantes :
▪ (i) organosilanes fonctionnalisés correspondant à la formule (I) dans laquelle : a + a' = 3 ; m = n = o = p = 0 (zéro) ; et q = 1 ;
▪ (2i) oligomères siloxanes fonctionnalisés correspondant à la formule (I) dans laquelle : a + a' = 1 ou 2 ; m se situe dans l'intervalle allant de 1 à 2 ; n = p = o = 0 (zéro) ; et q = 1 ;
▪ (3i) mélanges d'au moins une espèce (i) et/ou d'au moins une espèce (2i).

Les oligomères siloxanes fonctionnalisés (2i) et les mélanges (3i) d'au moins une espèce (i) et d'au moins une espèce (2i) sont nouveaux en tant que tels sans exclusion des composés organosiliciques de formule (I*), (II*) ou (III*) telles que définies ci-dessus, lorsque les composés considérés sont exclusivement constitués par des composés de formule (I) dans laquelle : a = 3, q = 1, m = n = o = p = 0 (zéro).

Dans ce qui précède, par groupe hydrocarboné aliphatique, on entend, au sens de l'invention, un groupe linéaire ou ramifié, de préférence comprenant de 1 à 25 atomes de carbone, éventuellement substitué.

Avantageusement, ledit groupe hydrocarboné aliphatique comprend de 1 à 18 atomes de carbone, mieux de 1 à 8 atomes de carbone et mieux encore de 1 à 6 atomes de carbone.

A titre de groupe hydrocarboné aliphatique saturé, on peut citer les groupes alkyle, tels que les radicaux méthyle, éthyle, propyle, isopropyle, n-butyle, isobutyle, t-butyle, pentyle, isopentyle, néopentyle, 2-méthylbutyle, 1-éthylpropyle, hexyle, isohexyle, néohexyle, 1-méthylpentyle, 3-méthylpentyle, 1,1-diméthylbutyle, 1,3-diméthylbutyle, 2-éthylbutyle, 1-méthyl-1-éthylpropyle, heptyle, 1-méthylhexyle, 1-propylbutyle, 4,4-diméthylpentyle, octyle, 1-méthylheptyle, 2-éthylhexyle, 5,5-diméthylhexyle, nonyle, décyle, 1-méthylnonyle, 3,7-diméthyloctyle et 7,7-diméthyloctyle, hexadécyle.
Les groupes hydrocarbonés aliphatiques insaturés comprennent une ou plusieurs insaturations, de préférence une, deux ou trois insaturations de type éthylénique (double liaison) ou/et acétylénique (triple liaison).

Des exemples en sont les groupes alcényle ou alcynyle dérivant des groupes alkyle définis ci-dessus par élimination de deux atomes d'hydrogène, ou plus. De manière préférée, les groupes hydrocarbonés aliphatiques insaturés comprennent une seule insaturation.

Dans le cadre de l'invention, on entend par groupe carbocyclique, un radical monocyclique ou polycyclique, éventuellement substitué, de préférence en C₃-C₅₀. De façon avantageuse, il s'agit d'un radical en C₃-C₁₈, de préférence mono-, bi- ou tricyclique. Lorsque le groupe carbocyclique comprend plus d'un noyau cyclique (cas des carbocycles polycycliques), les noyaux cycliques sont condensés deux à deux. Deux noyaux condensés peuvent être orthocondensés ou péricondensés.

Le groupe carbocyclique peut comprendre, sauf indications contraires, une partie saturée et/ou une partie aromatique et/ou une partie insaturée.

Des exemples de groupes carbocycliques saturés sont les groupes cycloalkyle. De manière préférée, les groupes cycloalkyle sont en C₃-C₁₈, mieux encore en C₅-C₁₀. On peut citer notamment les radicaux cyclopentyle, cyclohexyle, cycloheptyle, cyclooctyle, adamantyle ou norbomyle.

Le carbocycle insaturé ou toute partie insaturée de type carbocyclique présente une ou plusieurs insaturations éthyléniques, de préférence une, deux ou trois. Il présente avantageusement de 6 à 50 atomes de carbone, mieux encore de 6 à 20, par exemple de 6 à 18. Des exemples de carbocycles insaturés sont les groupes cycloalcényles en C₆-C₁₀.

Des exemples de radicaux carbocycliques aromatiques sont les groupes (C₆-C₁₈)aryles, mieux encore (C₆-C₁₂)aryles et notamment phényle, naphtyle, anthryle et phénanthryle.

Un groupe présentant à la fois une partie aliphatique hydrocarbonée telle que définie ci-dessus et une partie carbocyclique telle que définie ci-dessus est, par exemple, un groupe arylalkyle tel que benzyle, ou un groupe alkylaryle tel que tolyle.

Les substituants des groupes ou parties aliphatiques hydrocarbonés et des groupes ou parties carbocycliques sont, par exemple, des groupes alcoxy dans lesquels la partie alkyle est préférablement telle que définie ci-dessus.

Par groupe monovalent hydrolysable dont on a parlé supra à propos des symboles G², on entend des groupes tels que, par exemple : les atomes d'halogène, notamment le chlore ; les groupes -O-G⁷ et -O-CO-G₇ où G₇ représente : un groupe hydrocarboné aliphatique, saturé ou insaturé, ou un groupe carbocyclique, saturé, insaturé et/ou aromatique, monocyclique ou polycyclique, ou un groupe présentant une partie hydrocarbonée aliphatique, saturée ou insaturée et une partie carbocyclique telle que définie ci-dessus, G₇ pouvant être éventuellement halogéné et/ou substitué par un ou plusieurs alcoxy ; les groupes -O-N=CG₈G₉ dans lesquels G₈ et G₉ prennent indépendamment l'une quelconque des significations données ci-dessus pour G₇, G₈ et G₉ pouvant être halogénés ou/et éventuellement substitués par un ou plusieurs alcoxy ; les groupes -O-NG₈G₉ dans lesquels G₈ et G₉ sont tels que définis ci-dessus.

Avantageusement, pareil groupe monovalent hydrolysable est un radical : alcoxy, linéaire ou ramifié, en C₁-C₈ éventuellement halogéné et/ou éventuellement substitué par un ou plusieurs (C₁-C₈)alcoxy ; acyloxy en C₂-C₉ éventuellement halogéné ou éventuellement substitué par un ou plusieurs (C₁-C₈)alcoxy ; cycloalkyloxy en C₅-C₁₀ ; ou aryloxy en C₆-C₁₈. A titre d'exemple, le groupe hydrolysable est méthoxy, éthoxy, n-propoxy, isopropoxy, n-butoxy, méthoxyméthoxy, éthoxyéthoxy, méthoxyéthoxy, β-chloropropoxy ou β-chloroéthoxy ou bien encore acétoxy.

Comme groupes carbocycliques monovalents que peuvent former ensemble, dans la formule (I), deux substituants G² et l'atome de silicium auquel ils sont liés, on citera par exemple les cycles :

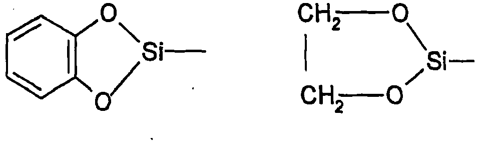

Comme cycles uniques que peuvent former ensemble d'une part les substituants G³ et G⁴ de l'atome d'azote présent dans le symbole A de la formule (I) et d'autre part les substituants R² et R³ de l'atome d'azote présent dans le symbole J de la formule (III), on citera par exemple les cycles suivants où la valence libre est portée par un atome d'azote : le pyrrole, l'imidazole, le pyrazole, la pyrrolidine, la Δ2-pyrroline, l'imidazolidine, la Δ2-imidazoline, la pyrazolidine, la Δ3-pyrazoline, la pipéridine ; des exemples préférés sont : le pyrrole, l'imidazole et le pyrazole.

De préférence, le procédé est mis en oeuvre en milieu anhydre, de préférence en solution organique.

Les solvants choisis sont, par exemple, ceux appartenant aux classes de solvants suivantes:les solvants chlorés tels que le dichlorométhane et le chloroforme, les solvants aromatiques tels que le toluène, le xylène ou le monochlorobenzène, les éthers tels que le tétrahydrofurane, les réactifs (III) et leurs mélanges.

Il est apparu tout à fait souhaitable, conformément à l'invention, de sélectionner B parmi les bases de type carbonate, en particulier de sodium. L'un des avantages de ce type de bases B, est qu'elles permettent de s'affranchir de la pyridine.

Selon une modalité préférée, ce procédé est mis en oeuvre à température ambiante et/ou à pression atmosphérique.

Suivant une caractéristique remarquable, le procédé selon l'invention comprend essentiellement les étapes suivantes :
▪ on mélange le précurseur (II), la base (B), le réactif supplémentaire (III), un solvant organique et un oxydant (Ox), ce dernier étant de préférence incorporé progressivement au milieu réactionnel pendant quelques minutes à quelques heures ;
▪ on laisse réagir, de préférence sous agitation ;
▪ on filtre le milieu réactionnel en éliminant l'éventuel excès de base (B) par formation d'un sel MOx ;
▪ et, éventuellement on concentre.

Suivant une modalité particulièrement avantageuse du procédé selon l'invention, Ox est mis en oeuvre en quantités stoechiométriques par rapport au précurseur (II).
Par exemple, Ox peut être utilisé à raison de 1M stoechiométrique.

Suivant une autre modalité particulièrement avantageuse du procédé selon l'invention, B est mis en oeuvre en quantités stoechiométriques par rapport à la quantité d'acide libéré par la réaction.

La quantité de réactif supplémentaire (III) mise en oeuvre n'est pas critique, mais il est préférable, conformément à l'invention, que cette quantité, par rapport au précurseur (II), soit d'au moins 0,1M, de préférence d'au moins 1M jusqu'à 100M ou davantage, et, plus préférentiellement encore soit comprise entre 1 et 10M.

Avantageusement, les composés organosiliciques à groupement azo obtenus par le procédé selon l'invention ne comprennent que des traces d'alcool, voire en sont exemptes. Par "alcool", on désigne notamment au sens du présent exposé, les COV.

Le procédé selon l'invention de préparation des composés organosiliciques à groupement azo (I), peut s'inscrire dans un procédé de synthèse comportant au moins les étapes suivantes :
(i) : on fait réagir un silane précurseur de formule (IV) :

   [(G⁰)₃SiO_{1/2}]ₘ[(G⁰)₂SiO_{2/2}]ₙ[G⁰SiO_{3/2}]ₒ[SiO_{4/2}]ₚ[(G²)ₐ(G¹)_{a'}L¹SiO_{(3-a-a')/2}]_{q} (IV)

   avec un dérivé hydrazo précurseur de formule (V) :

   L²-NH-NH-CO-A (V)

   formules dans lesquelles les symboles G^{o}, G¹, G², m,n,o,p,q,a,a' et A sont tels que définis ci-avant, et L¹ et L² représentent des groupes dont la structure et la fonctionnalité sont telles que ces groupes sont capables de réagir l'un avec l'autre pour donner naissance à l'enchaînement central -Z-CO- de manière à conduire au précurseur de formule (II) :

   [(G⁰)3SiO_{1/2}]ₘ[(G⁰)₂SiO_{2/2}]ₙ[G⁰SiO_{3/2}]ₒ[SiO_{4/2}]ₚ[(G²)ₐ(G¹)_{a'}(Z-CO-HN-NH-CO-A)SiO_{(3-a-a')/2}]_{q} (II)
(ii) : on fait subir au précurseur de formule (II) une réaction d'oxydation du groupe hydrazo -HN-NH- en groupe azo -N=N-.

L'oxydation de l'étape (ii) correspond au procédé de préparation selon la présente invention.

Pour la préparation, par exemple, des composés organosiliciques à groupement azo (I), dans la structure desquels le symbole Z représente alors le radical divalent -(CH₂)₃-NH-, le schéma de synthèse qui est appliqué peut être le suivant :
(i) : on fait réagir un silane précurseur de formule (IV) :

   [(G⁰)₃SiO_{1/2}]ₘ[(G⁰)₂SiO_{2/2}]ₙ[G⁰SiO_{3/2}]ₒ[SiO_{4/2}]ₚ[(G²)ₐ(G¹)_{a'}SiO_{(3-a-a')/2}L¹-(CH₂)₃-NCO]_{q} (IV)

   avec un dérivé hydrazo précurseur de formule (V) :

   H₂N-NH-CO-A (V)

   pour obtenir le composé hydrazo de formule (II) :

   [(G⁰)₃SiO_{1/2})ₘ[(G⁰)₂SiO_{2/2}]ₙ[G⁰SiO_{3/2}]ₒ[SiO_{4/2}]ₚ[(G²)ₐ(G¹)_{a'}SiO_{(3-a-a')/2}-(CH₂)₃-NH-CO-NH-NH-CO-A (II)
(ii) : on fait subir au composé de formule (II) une réaction d'oxydation du groupe hydrazo -HN-NH- en groupe azo -N=N-

En résumé, l'étape (i) d'obtention du précurseur (II) & l'étape (ii) d'oxydation de (II) en (I), sont conformes à la méthodologie générale suivante :
ETAPE (i) :
   ∘ Mise en oeuvre dérivé hydrazo précurseur de formule (V) et solvant, à température ambiante dans le réacteur, sous atmosphère inerte.
   ∘ Agitation à plusieurs centaines de tours/min et chauffage à T= 40-100°C.
   ∘ Addition du silane précurseur de formule (IV) en plusieurs dizaines de minutes.
   ∘ Réaction pendant plusieurs heures sous agitation à T= 40-100°C avant retour à température ambiante.
   ∘ Repos quelques heures à température ambiante.
   ∘ Récupération précurseur de formule (II) solide (par exemple), filtration, lavage, séchage.
ETAPE (ii) :
   - Mise en oeuvre du précurseur (II), Ox (par exemple Ox2) et solvant à température ambiante dans le réacteur, sous atmosphère inerte.
   - Ajout d'Ox (par exemple Ox1) dans le réacteur en plusieurs dizaines de minutes, à température inférieure à 30°C, de préférence 25°C.
   - Agitation à température ambiante pendant plusieurs heures.
   - Concentration.
   - Récupération des composés (I) organosiliciques à groupement(s) fonctionnel(s) azo activé(s) (I).
   - Lavage, filtration.
   - Concentration.

Pour plus de détails sur les nouveaux composés organosiliciques selon l'invention ainsi que sur la méthodologie pratique mise en oeuvre, on se reportera aux exemples infra.
Les exemples suivants illustrent la portée du procédé évoqué ci-dessus.

### EXEMPLES

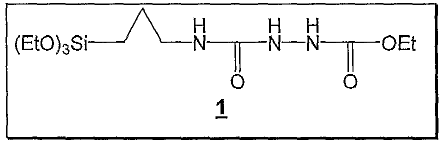

Et = radical monovalent Ethyle

### Exemple 1 :

Dans un réacteur de 250 mL, sont introduits 10 g (28,4 mmol, 1 éq) du composé **1**, 7,53 g (71 mmol, 2.5 éq) de Na₂CO₃ sec, 10,06 g (85,2 mmol, 3 éq) de triméthyléthoxysilane et 50 mL de dichlorométhane. Une solution de 4,55 g de brome (28,4 mmol, 1 éq) dans 15 mL de dichlorométhane est ajoutée goutte à goutte en 1 heure. Le mélange réactionnel est agité 30 minutes supplémentaires après la fin de l'addition du brome.

Le mélange réactionnel est ensuite filtré puis concentré sous vide. 8,28 g d'un liquide orange vif fluide sont obtenus.

L'analyse par RMN ¹H montre que le composé **1** a été entièrement consommé, que la groupement azo a été formée sélectivement et que la perte en groupement SiOEt est limitée. La composition molaire du produit final est indiquée dans le tableau 1.

### Exemple 2 :

Dans un réacteur de 250 mL, sont introduits 10 g (28,4 mmol, 1 éq) du composé **1**, 7,53 g (71 mmol, 2.5 éq) de Na₂CO₃ sec et 50 mL d'un mélange 50/50 (vol/vol) de triméthyléthoxysilane et de dichlorométhane. Une solution de 4,55 g de brome (28,4 mmol, 1 éq) dans 15 mL de dichlorométhane est ajoutée goutte à goutte en 1 heure. Le mélange réactionnel est agité 30 minutes supplémentaires après la fin de l'addition du brome.

Le mélange réactionnel est ensuite filtré puis concentré sous vide. 9,77 g d'un liquide orange vif fluide sont obtenus.

L'analyse par RMN ¹H montre que le composé **1** a été entièrement consommé, que la groupement azo a été formée sélectivement et que la perte en SiOEt est limitée. La composition molaire du produit final est indiquée dans le tableau 1.

### Exemple 3 :

Dans un réacteur de 250 mL, sont introduits 10 g (28,4 mmol, 1 éq) du composé **1**, 3,31 g (31,2 mmol, 1.1 éq) de Na₂CO₃ sec et 50 mL d'un mélange 50/50 (vol/vol) de triméthyléthoxysilane et de dichlorométhane. Une solution de 4,55 g de brome (28,4 mmol, 1 éq) dans 15 mL de dichlorométhane est ajoutée goutte à goutte en 1 heure. Le mélange réactionnel est agité 30 minutes supplémentaires après la fin de l'addition du brome.

Le mélange réactionnel est ensuite filtré puis concentré sous vide. 9,78 g d'un liquide orange vif fluide sont obtenus.

L'analyse par RMN ¹H montre que le composé **1** a été entièrement consommé, que la groupement azo a été formée sélectivement et que la perte en groupement SiOEt est limitée. La composition molaire du produit final est indiquée dans le tableau 1.

Le produit final obtenu à l'issue des exemples 1 à 3 est un mélange :
- de l'espèce silane de formule :

   (iₐ): (C₂H₅O)₃Si-(CH₂)₃-NH-CO-N=N-COOC₂H₃
- avec les espèces siloxanes de formules :

   (2i.1ₐ) : [(CH₃)₃SiO_{½}][(C₂H₅O)₂{(CH₂)₃-NH-CO-N=N-COOC₂H₅}SiO_{1/2}] et

   (2i.2ₐ) : [(CH₃)₃SiO_{1/2}]₂[(C₂H₅O){(CH₂)₃-NH-CO-N=N-COOC₂H₅}SiO_{2/2}]
dont les proportions molaires sont indiquées dans le tableau 1 suivant.

**Tableau 1**

| | Espèce (iₐ): | Espèce (2i.1ₐ) | Espèce (2i.2ₐ) | Perte en fonctions SiOEt |
|---|---|---|---|---|
| Exemple 1 | 62% | 33% | 5% | 14,3% |
| Exemple 2 | 81% | 12% | 7% | 8,7% |
| Exemple 3 | 63% | 26% | 11% | 16% |

## Revendications

1. Procédé de préparation de composés organosiliciques comprenant un ou plusieurs composés, identiques ou différents entre eux, de formule (I) ci-après détaillée :
[(G⁰)₃SiO_{1/2}]ₘ[(G⁰)₂SiO_{2/2}]ₙ[G⁰SiO_{3/2}]ₒ[SiO_{4/2}]ₚ[(G²)ₐ(G¹)_{a'}(Z-CO-N=N-CO-A)SiO_{(3-a-a')/2}]_{q} (I)
dans laquelle :
- m, n, o, p représentent chacun un nombre entier ou fractionnaire égal ou supérieur à 0 ;
- q représente un nombre entier ou fractionnaire égal ou supérieur à 1 ;
- a représente un nombre entier choisi parmi 0,1, 2 et 3 ;
- a' représente un nombre entier choisi parmi 0, 1 et 2 ;
- la somme a + a' se situe dans l'intervalle allant de 0 à 3 avec les conditions selon lesquelles :
-(C1)-quand a = 0, alors :
⇒ soit au moins un des m, n, o, p est un nombre différent de 0 (zéro) et q est égal ou supérieur à 1 ;
⇒ soit q est supérieur à 1 et chacun des m, n, o, p a une valeur quelconque ;
⇒ et au moins un des symboles G⁰ répond à la définition donnée ci-après pour G² ;
-(C2)- quand a + a' = 3, alors m = n = o = p = 0 (zéro) ;
- les symboles G⁰, identiques ou différents, représentent chacun l'un des groupes correspondant à G² ou G¹ ;
- les symboles G², identiques ou différents, représentent chacun : un groupe hydroxyle, un groupe monovalent hydrolysable ou deux G² forment ensemble et avec le silicium auquel ils sont liés, un cycle ayant 3 à 5 chaînons hydrocarbonés et pouvant comprendre au moins un hétéroatome, au moins l'un de ces chaînons pouvant également être un chaînon d'au moins un autre cycle hydrocarboné ou aromatique ;
- les symboles G¹, identiques ou différents, représentent chacun : un groupe hydrocarboné aliphatique, saturé ou insaturé ; un groupe carbocyclique, saturé ou insaturé et/ou aromatique, monocyclique ou polycyclique ; ou un groupe représentant une partie hydrocarbonée aliphatique, saturée ou insaturée et une partie carbocyclique telle que définie ci-dessus ;
- le symbole Z représente un radical divalent choisi parmi : un groupe hydrocarboné aliphatique, saturé ou insaturé ; un groupe carbocyclique, saturé, insaturé et/ou aromatique, monocyclique ou polycyclique; et un groupe présentant une partie hydrocarbonée aliphatique, saturée ou insaturée et une partie carbocyclique telle que définie ci-dessus ; ledit radical divalent étant éventuellement substitué ou interrompu par un atome d'oxygène et/ou un atome de soufre et/ou un atome d'azote, ledit atome d'azote portant 1 groupe monovalent choisi parmi : un atome d'hydrogène ; un atome hydrocarboné aliphatique, saturé ou insaturé ; un groupe carbocyclique, saturé ou insaturé et/ou aromatique, monocyclique ou polycyclique ; et un groupe présentant une partie hydrocarbonée aliphatique, saturée ou insaturée et une partie carbocyclique telle que définie ci-dessus ;
- le symbole A représente :
+ un groupe hydrocarboné aliphatique, saturé ou insaturé ; un groupe carbocyclique, saturé ou insaturé et/ou aromatique, monocyclique ou polycyclique ; ou un groupe représentant une partie hydrocarbonée aliphatique, saturée ou insaturée et une partie carbocyclique telle que définie ci-dessus ;
+ un groupe -X-G³ où : X représente -O-, -S- ou -NG⁴- avec G⁴ prenant l'une quelconque des significations données ci-avant pour G¹ ; G³, identique ou différent de G⁴, représente l'un quelconques des groupes définis pour G¹ ; les substituants G³ et G⁴ du groupe -NG⁴G³ pouvant, en outre, former ensemble et avec l'atome d'azote auquel ils sont liés un cycle unique ayant de 5 à 7 chaînons, comportant dans le cycle 3 à 6 atomes de carbone, 1 ou 2 atome(s) d'azote et éventuellement 1 ou 2 double(s) liaison(s) insaturée(s) ;
+ ou, lorsque q = 1, un groupe [-Z-SiO_{(3-a-a')/2}(G²)ₐ(G¹)_{a'}][(G⁰)₃SiO_{1/2}]ₘ[(G⁰)₂SiO_{2/2}]ₙ [G⁰SiO_{3/2}]ₒ[SiO_{4/2}]ₚ dans lequel les symboles Z, G¹, G², a, a', m, n, o, et p possèdent les définitions indiquées ci-avant ;
⇒ ce procédé étant du type de ceux consistant :
▪ à mettre en oeuvre au moins un précurseur (II) d'au moins un composé organosilicique (I), ledit précurseur répondant à la formule (II) suivante :
[(G⁰)₃SiO_{1/2}]ₘ[(G⁰)₂SiO_{2/2}]ₙ[G⁰SiO_{3/2}]ₒ[SiO_{4/2}]ₚ[(G²)ₐ(G¹)_{a'}(Z-CO-HN-NH-CO-A)SiO_{(3-a-a')/2}]_{q} (II)
dans laquelle les symboles G^{o}, G¹, G², Z, A m,n,o,p, a, a' et q sont tels que définis ci-dessus en légende de la formule (I),
▪ à oxyder le groupement hydrazino du précurseur (II) en groupement azo propre au composé organosilicique (I), à l'aide d'un système oxydant comprenant au moins un oxydant (Ox) et au moins une base (B),
⇒ et ce procédé étant **caractérisé en ce qu'**il est notamment prévu :
▪ de sélectionner la base B parmi les bases minérales, de préférence parmi les bases minérales de formule (B): M₂CO₃ dans laquelle M est un métal - de préférence un métal alcalin- ;
▪ de sélectionner Ox dans le groupe comprenant : le brome, l'hypochlorite de tertiobutyle, l'acide trichloroisocyanurique, le chlore et leurs mélanges ;
▪ et de faire intervenir un réactif supplémentaire choisi parmi les silanes
(pris seuls ou en mélange entre eux) de formule (III) :
(G⁰)₄₋ₚ₁Si(G^{2'})ₚ₁
dans laquelle :
* les symboles G° identiques ou différents, représentent chacun : un groupe hydrocarboné aliphatique, saturé ou insaturé ; un groupe carbocyclique, saturé ou insaturé et/ou aromatique, monocyclique ou polycyclique; ou un groupe représentant une partie hydrocarbonée aliphatique, saturée ou insaturée et une partie carbocyclique telle que définie ci-dessus; ou un reste polysiloxane ;
* les symboles G^{2'} étant identiques ou différents et représentant un groupement monovalent hydrolysable répondant à la même définition que celle donnée supra pour les symboles G² décrits en relation avec la formule (I);
* p1 représente un nombre entier choisi parmi 1 et 2, de préférence 1.

2. Procédé selon la revendication 1, **caractérisé en ce qu'**il est mis en oeuvre en milieu anhydre, de préférence en solution organique.

3. Procédé selon la revendication 1 ou 2, **caractérisé en ce qu'**il est mis en oeuvre à température ambiante et/ou à pression atmosphérique.

4. Procédé selon l'une quelconque des revendications 1 à 3, **caractérisé en ce que** :
• on mélange le précurseur (II), la base (B), le réactif supplémentaire (III), un solvant organique et un oxydant (Ox), ce dernier étant de préférence incorporé progressivement au milieu réactionnel pendant quelques minutes à quelques heures ;
• on laisse réagir, de préférence sous agitation ;
• on filtre le milieu réactionnel en éliminant l'éventuel excès de base (B) par formation d'un sel MOx ;
• et, éventuellement on concentre.

5. Procédé selon la revendication 4, **caractérisé en ce que** Ox est (sont) mis en oeuvre en quantités stoechiométriques par rapport au précurseur (II).

6. Procédé selon la revendication 4 ou 5, **caractérisé en ce que** B est mis en oeuvre en quantités stoechiométriques par rapport à la quantité d'acide libéré par la réaction.

7. Procédé selon l'une au moins des revendications 4 à 6, **caractérisé en ce que** la quantité de réactif supplémentaire (III) mise en oeuvre, par rapport au précurseur (II), est d'au moins 0,1M, de préférence d'au moins 1M jusqu'à 100M ou davantage, et, plus préférentiellement encore est comprise entre 1 et 10M.

8. Procédé selon l'une au moins des revendications 4 à 7, **caractérisé en ce que** les composés organosiliciques obtenus ne comprennent que des traces d'alcool, voire en sont exempts.

9. Procédé selon l'une au moins des revendications 1 à 8, **caractérisé en ce que** préalablement à l'oxydation du groupe hydrazo -HN-NH- du précurseur de formule (II), en groupe azo -N=N-, il comprend au moins l'étape suivante de synthèse du précurseur (II) : on fait réagir un silane précurseur de formule (IV) :
[(G⁰)₃SiO_{1/2}]ₘ[(G⁰)₂SiO_{2/2}]ₙ[G⁰SiO_{3/2}]ₒ[SiO_{4/2}]ₚ[(G²)ₐ(G¹)_{a'}L¹SiO_{(3-a-a')/2}]_{q} (IV)
avec un dérivé hydrazo précurseur de formule (V) :
L²-NH-NH-CO-A (V)
formules dans lesquelles les symboles G^{o}, G¹, G², m, n, o, p, q, a, a' et A sont tels que définis ci-avant, et L¹ et L² représentent des groupes dont la structure et la fonctionnalité sont telles que ces groupes sont capables de réagir l'un avec l'autre pour donner naissance à l'enchaînement central -Z-CO- de manière à conduire au précurseur de formule (II) :
[(G⁰)₃SiO_{1/2}]ₘ[(G⁰)₂SiO_{2/2}]ₙ[G⁰SiO_{3/2}]ₒ[SiO_{4/2}]ₚ[(G²)ₐ(G¹)_{a'}(Z-CO-HN-NH-CO-A)SiO_{(3-a-a')/2}]_{q} (II)

10. Procédé selon la revendication 9, **caractérisé en ce qu'**il est conforme à la méthodologie générale suivante :
ETAPE (i) :
∘ Mise en oeuvre dérivé hydrazo précurseur de formule (V) et solvant, à température ambiante dans le réacteur, sous atmosphère inerte.
∘ Agitation à plusieurs centaines de tours/min et chauffage à T = 40-100°C.
∘ Addition du silane précurseur de formule (IV) en plusieurs dizaines de minutes.
∘ Réaction pendant plusieurs heures sous agitation à T = 40-100°C avant retour à température ambiante.
∘ Repos quelques heures à température ambiante.
∘ Récupération précurseur de formule (II) solide, filtration, lavage, séchage.
ETAPE (ii) :
• Mise en oeuvre du précurseur (II), Ox et solvant à température ambiante dans le réacteur, sous atmosphère inerte.
• Ajout d'Ox dans le réacteur en plusieurs dizaines de minutes, à température inférieure à 30°C, de préférence 25°C.
• Agitation à température ambiante pendant plusieurs heures.
• Concentration.
• Récupération d'un composé (I).
• Lavage, filtration.
• Concentration.

## Patentansprüche

1. Verfahren zur Herstellung von Organosiliciumverbindungen, umfassend eine oder mehrere gleiche oder voneinander verschiedene Verbindungen der nachstehenden Formel (I) :
[(G⁰)₃SiO_{1/2}]ₘ[(G⁰)₂SiO_{2/2}]ₙ[G⁰SiO_{3/2}]ₒ[SiO_{4/2}]ₚ[(G²)ₐ(G¹)_{a'}(Z-CO-N=N-CO-A)SiO_{(3-a-a')/2}]_{q} (I)
in der :
- m, n, o und p jeweils für eine ganze oder gebrochene Zahl größer oder gleich 0 stehen;
- q für eine ganze oder gebrochene Zahl größer oder gleich 1 steht;
- a für eine ganze Zahl steht, die aus 0, 1, 2 und 3 ausgewählt ist;
- a' für eine ganze Zahl steht, die aus 0, 1 und 2 ausgewählt ist;
- die Summe a + a' im Bereich von 0 bis 3 liegt, mit den folgenden Maßgaben :
-(C1)- wenn a = 0, dann :
⇒ steht mindestens eine der Variablen m, n, o und p für eine Zahl, die von 0 (null) verschieden ist, und ist q größer oder gleich 1;
⇒ oder ist q größer als 1 und hat jede der Variablen m, n, o und p einen beliebigen Wert;
⇒ und entspricht mindestens eines der Symbole G⁰ der nachstehend für G² angegebenen Definition;
-(C2)- wenn a + a' = 3, dann m = n = o = p = 0 (null);
- die Symbole G⁰, die gleich oder verschieden sind, jeweils für eine der G² oder G¹ entsprechenden Gruppen stehen;
- die Symbole G², die gleich oder verschieden sind, jeweils für eine Hydroxylgruppe oder eine hydrolysierbare einwertige Gruppe stehen oder zwei G² zusammen mit dem Silicium, an das sie gebunden sind, einen Ring bilden, der 3 bis 5 Kohlenwasserstoffglieder aufweist und mindestens ein Heteroatom enthalten kann, wobei mindestens eines dieser Glieder auch ein Glied mindestens eines anderen Kohlenwasserstoffrings oder aromatischen Rings sein kann;
- die Symbole G¹, die gleich oder verschieden sind, jeweils für eine gesättigte oder ungesättigte aliphatische Kohlenwasserstoffgruppe, eine monocyclische oder polycyclische, gesättigte oder ungesättigte und/oder aromatische carbocyclische Gruppe oder eine Gruppe mit einem gesättigten oder ungesättigten aliphatischen Kohlenwasserstoffteil und einem carbocyclischen Teil gemäß obiger Definition stehen;
- das Symbol Z für einen zweiwertigen Rest steht, der aus einer gesättigten oder ungesättigten aliphatischen Kohlenwasserstoffgruppe, einer monocyclischen oder polycyclischen gesättigten, ungesättigten und/oder aromatischen carbocyclischen Gruppe und einer Gruppe mit einem gesättigten oder ungesättigten aliphatischen Kohlenwasserstoffteil und einem carbocyclischen Teil gemäß obiger Definition ausgewählt ist, wobei der zweiwertigen Rest gegebenenfalls durch ein Sauerstoffatom und/oder ein Schwefelatom und/oder ein Stickstoffatom substituiert oder unterbrochen ist, wobei das Stickstoffatom 1 einwertige Gruppe tragen kann, die aus einem Wasserstoffatom, einem gesättigten oder ungesättigten aliphatischen Kohlenwasserstoffatom, einer monocyclischen oder polycyclischen gesättigten, ungesättigten und/oder aromatischen carbocyclischen Gruppe und einer Gruppe mit einem gesättigten oder ungesättigten aliphatischen Kohlenwasserstoffteil und einem carbocyclischen Teil gemäß obiger Definition ausgewählt ist;
- das Symbol A für
+ eine gesättigte oder ungesättigte aliphatische Kohlenwasserstoffgruppe, eine monocyclische oder polycyclische, gesättigte oder ungesättigte und/oder aromatische carbocyclische Gruppe oder eine Gruppe mit einem gesättigten oder ungesättigten aliphatischen Kohlenwasserstoffteil und einem carbocyclischen Teil gemäß obiger Definition;
+ eine Gruppe -X-G³, wobei X für -O-, -S- oder -NG⁴- steht, wobei G⁴ eine der oben für G¹ angegebenen Bedeutungen besitzt; G³, das mit G⁴ identisch oder davon verschieden ist, für eine der für G¹ definierten Gruppen steht; wobei die Substituenten G³ und G⁴ der Gruppe -NG⁴G³ außerdem zusammen mit dem Stickstoffatom, an das sie gebunden sind, einen einzigen 5- bis 7-gliedrigen Ring mit 3 bis 6 Kohlenstoffatomen, 1 oder 2 Stickstoffatomen und gegebenenfalls 1 oder 2 ungesättigten Doppelbindungen im Ring bilden können;
+ oder dann, wenn q = 1, eine Gruppe [-Z-SiO_{(3-a-a')/2}(G²)ₐ(G¹)_{a'}) [(G⁰)₃SiO_{1/2}]ₘ[(G⁰)₂SiO_{2/2}]ₙ[G⁰SiO_{3/2}]ₒ[SiO_{4/2}]ₚ, in der die Symbole Z, G¹, G², a, a', m, n, o und p die oben angegebenen Definitionen besitzen;
steht;
⇒ wobei das Verfahren von der Art derjenigen Verfahren ist, die aus Folgendem bestehen :
▪ Einsetzen mindestens einer Vorstufe (II) mindestens einer Organosiliciumverbindung (I), wobei die Vorstufe der folgenden Formel (II) entspricht :
[(G⁰)₃SiO_{1/2}]ₘ[(G⁰)₂SiO_{2/2}]ₙ[G⁰SiO_{3/2}]ₒ[SiO_{4/2}]ₚ[(G²)ₐ(G¹)_{a'}(Z-CO-HN-NH-CO-A)SiO_{(3-a-a')/2}]_{q} (II)
wobei die Symbole G⁰, G¹, G², Z, A, m, n, o, p, a, a' und q wie oben in der Legende der Formel (I) definiert sind,
▪ Oxidieren der Hydrazinogruppe der Vorstufe (II) zu einer für die Organosiliciumverbindung (I) charakteristischen Azogruppe mit Hilfe eines Oxidationssystems, das mindestens ein Oxidationsmittel (Ox) und mindestens eine Base (B) umfasst,
⇒ und wobei dieses Verfahren **dadurch gekennzeichnet ist, dass** insbesondere Folgendes vorgesehen ist:
▪ Auswählen der Base B aus anorganischen Basen, vorzugsweise aus anorganischen Basen der Formel (B) : M₂CO₃, in der M für ein Metall - vorzugsweise ein Alkalimetall - steht;
▪ Auswählen von Ox aus der Gruppe umfassend Brom, tert-Butylhypochlorit, Trichlorisocyanursäure, Chlor und Mischungen davon;
▪ und Einsetzen eines zusätzlichen Reagens, das aus den Silanen (alleine oder als Mischung miteinander) der Formel (III) :
(G⁰)₄₋ₚ₁Si(G^{2'})ₚ₁
ausgewählt ist, in der
* die Symbole G⁰, die gleich oder verschieden sind, jeweils für eine gesättigte oder ungesättigte aliphatische Kohlenwasserstoffgruppe, eine monocyclische oder polycyclische, gesättigte oder ungesättigte und/oder aromatische carbocyclische Gruppe oder eine Gruppe mit einem gesättigten oder ungesättigten aliphatischen Kohlenwasserstoffteil und einem carbocyclischen Teil gemäß obiger Definition oder einen Polysiloxanrest stehen;
* die Symbole G² gleich oder verschieden sind und jeweils für eine hydrolysierbare einwertige Gruppe stehen, die der gleichen Definition, wie sie oben für die im Zusammenhang mit der Formel (I) beschriebenen Symbole G² angegeben ist, entspricht;
* p1 für eine ganze Zahl, die aus 1 und 2 ausgewählt ist, vorzugsweise 1, steht.

2. Verfahren nach Anspruch 1, **dadurch gekennzeichnet, dass** es in einem wasserfreien Medium, vorzugsweise in organischer Lösung, durchgeführt wird.

3. Verfahren nach Anspruch 1 oder 2, **dadurch gekennzeichnet, dass** es bei Umgebungstemperatur und/oder Normaldruck durchgeführt wird.

4. Verfahren nach einem der Ansprüche 1 bis 3, **dadurch gekennzeichnet, dass** man
• die Vorstufe (II), die Base (B), das zusätzliche Reagens (III) ein organisches Lösungsmittel und ein Oxidationsmittel (Ox) mischt, wobei Letzteres vorzugsweise über einen Zeitraum von einigen Minuten bis einigen Stunden nach und nach in das Reaktionsmedium eingearbeitet wird;
• reagieren lässt, vorzugsweise unter Rühren;
• das Reaktionsmedium filtriert, wobei der eventuelle Überschuss von Base (B) durch Bildung eines Salzes MOx entfernt wird;
• und gegebenenfalls aufkonzentriert.

5. Verfahren nach Anspruch 4, **dadurch gekennzeichnet, dass** Ox in stöchiometrischen Mengen, bezogen auf die Vorstufe (II), eingesetzt wird.

6. Verfahren nach Anspruch 4 oder 5, **dadurch gekennzeichnet, dass** B in stöchiometrischen Mengen, bezogen auf die Menge der durch die Reaktion freigesetzten Säure, eingesetzt wird.

7. Verfahren nach mindestens einem der Ansprüche 4 bis 6, **dadurch gekennzeichnet, dass** die eingesetzte Menge an zusätzlichem Reagens (III), bezogen auf die Vorstufe (II) mindestens 0,1 M und vorzugsweise mindestens 1 M bis 100 M oder mehr beträgt und noch weiter bevorzugt zwischen 1 und 10 M liegt.

8. Verfahren nach mindestens einem der Ansprüche 4 bis 7, **dadurch gekennzeichnet, dass** die erhaltenen Organosiliciumverbindungen nur Spuren von Alkohol enthalten oder sogar alkoholfrei sind.

9. Verfahren nach mindestens einem der Ansprüche 1 bis 8, **dadurch gekennzeichnet, dass** es vor der Oxidation der Hydrazogruppe -HN-NH- der Vorstufe der Formel (II) zu einer Azogruppe -N=N- mindestens den folgenden Schritt der Synthese der Vorstufe (II) umfasst : man setzt eine Silanvorstufe der Formel (IV) :
[(G⁰)₃SiO_{1/2}]ₘ[(G⁰)₂SiO_{2/2}]ₙ[G⁰SiO_{3/2}]ₒ[SiO_{4/2}]ₚ[(G²)ₐ(G¹)_{a'}L¹SiO_{(3-a-a')/2}]_{q} (IV)
mit einer Hydrazoderivatvorstufe der Formel (V) :
L²-NH-NH-CO-A (V)
um, wobei in den Formeln die Symbole G⁰, G¹, G², m, n, o, p, q, a, a' und A wie oben definiert sind und L¹ und L² für Gruppen mit einer solchen Struktur und Funktionalität stehen, dass diese Gruppen unter Bildung der zentralen Verknüpfung -Z-CO- miteinander reagieren können, so dass sich die Vorstufe der Formel (II) :
[(G⁰)₃SiO_{1/2}]ₘ[(G⁰)₂SiO_{2/2}]ₙ[G⁰SiO_{3/2}]ₒ[SiO_{4/2}]ₚ[(G²)ₐ(G¹)_{a'}(Z-CO-HN-NH-CO-A)SiO_{(3-a-a')/2}]_{q} (II)
ergibt.

10. Verfahren nach Anspruch 9, **dadurch gekennzeichnet, dass** es der folgenden allgemeinen Methodik entspricht:
SCHRITT (i) :
∘ Eintragen von Hydrazoderivatvorstufe der Formel (V) und Lösungsmittel bei Umgebungstemperatur in das Reaktionsgefäß unter Inertatmosphäre,
∘ Rühren mit mehreren 100 Umdrehungen/min und Erhitzen auf T = 40-100 °C,
∘ Zugeben der Silanvorstufe der Formel (IV) über einen Zeitraum von mehreren zehn Minuten,
∘ Umsetzen über einen Zeitraum von mehreren Stunden unter Rühren bei T = 40-100 °C vor Rückkehr auf Umgebungstemperatur,
∘ Stehenlassen über einen Zeitraum von einigen Stunden bei Umgebungstemperatur,
∘ Gewinnen von fester Vorstufe der Formel (II), Filtrieren, Waschen, Trocknen,
SCHRITT (ii) :
• Eintragen von Vorstufe (II), Ox und Lösungsmittel bei Umgebungstemperatur in das Reaktionsgefäß unter Inertatmosphäre,
• Zugeben von Ox in den Reaktor über einen Zeitraum von mehreren zehn Minuten bei einer Temperatur unter 30 °C, vorzugsweise 25 °C,
• Rühren über einen Zeitraum von einigen Stunden bei Umgebungstemperatur,
• Aufkonzentrieren,
• Gewinnen einer Verbindung (I),
• Waschen, Filtrieren,
• Aufkonzentrieren.

## Claims

1. Process for the preparation of organosilicon compounds comprising one or more compounds, identical to or different from one another, of formula (I) described in detail below :
[(G⁰)₃SiO_{1/2}]_{m[}(G⁰)₂SiO_{2/2}]ₙ[G⁰SiO_{3/2}]ₒ[SiO_{4/2}]ₚ[(G²)ₐ(G¹)_{a'}(Z-CO-N=N-CO-A)SiO_{(3-a-a')/2}]_{q} (I)
in which :
- m, n, o and p each represent an integral or fractional number equal to or greater than 0;
- q represents an integral or fractional number equal to or greater than 1;
- a represents an integer chosen from 0, 1, 2 and 3;
- a' represents an integer chosen from 0, 1 and 2;
- the sum a + a' lies within the interval ranging from 0 to 3 with the conditions according to which :
-(C1)- when a = 0, then :
⇒ either at least one of the indices m, n, o or p is a number other than 0 (zero) and q is equal to or greater than 1;
⇒ or q is greater than 1 and each of the indices m, n, o or p has any value;
⇒ and at least one of the symbols G⁰ corresponds to the definition given below for G²;
-(C2)- when a + a' = 3, then m = n = o = p = 0 (zero);
- the symbols G⁰, which are identical or different, each represent one of the groups corresponding to G² or G¹;
- the symbols G², which are identical or different, each represent : a hydroxyl group, a hydrolysable monovalent group or two symbols G² form, together and with the silicon to which they are bonded, a ring which has from 3 to 5 hydrocarbon ring members and which may comprise at least one heteroatom, it being possible for at least one of these ring members also to be a ring member of at least one other hydrocarbon or aromatic ring;
- the symbols G¹, which are identical or different, each represent : a saturated or unsaturated aliphatic hydrocarbon group; a saturated or unsaturated and/or aromatic, monocyclic or polycyclic, carbocyclic group; or a group representing a saturated or unsaturated aliphatic hydrocarbon part and a carbocyclic part as defined above;
- the symbol Z represents a divalent radical chosen from: a saturated or unsaturated aliphatic hydrocarbon group; a saturated, unsaturated and/or aromatic, monocyclic or polycyclic, carbocyclic group; and a group exhibiting a saturated or unsaturated aliphatic hydrocarbon part and a carbocyclic part as defined above; the said divalent radical optionally being substituted or interrupted by an oxygen atom and/or a sulfur atom and/or a nitrogen atom, the said nitrogen atom carrying 1 monovalent group chosen from : a hydrogen atom; a saturated or unsaturated aliphatic hydrocarbon atom; a saturated or unsaturated and/or aromatic, monocyclic or polycyclic, carbocyclic group; and a group exhibiting a saturated or unsaturated aliphatic hydrocarbon part and a carbocyclic part as defined above;
- the symbol A represents :
+ a saturated or unsaturated aliphatic hydrocarbon group; a saturated or unsaturated and/or aromatic, monocyclic or polycyclic, carbocyclic group; or a group exhibiting a saturated or unsaturated aliphatic hydrocarbon part and a carbocyclic part as defined above;
+ a group -X-G³ where : X represents -O-, -S- or -NG⁴- with G⁴ taking any one of the meanings given above for G¹; G³, which is identical to or different from G⁴, represents any one of the groups defined for G¹; it being possible for the substituents G³ and G⁴ of the group -NG⁴G³, in addition, to form, together and with the nitrogen atom to which they are bonded, a single ring having from 5 to 7 ring members, comprising, in the ring, from 3 to 6 carbon atoms, 1 or 2 nitrogen atom(s) and optionally 1 or 2 unsaturated double bond(s);
+ or, when q = 1, a group [-Z-SiO_{(3-a-a')/2}(G²)ₐ(G¹)_{a'}][(G⁰)₃SiO_{1/2}]ₘ [(G⁰)₂SiO_{2/2}]ₙ[G⁰SiO_{3/2}]ₒ [SiO_{4/2}]ₚ in which the symbols Z, G¹, G², a, a', m, n, o and p have the definitions indicated above;
⇒ this process being of the type of those consisting :
▪ in employing at least one precursor (II) of at least one organosilicon compound (I), the said precursor corresponding to the following formula (II) :
[(G⁰)₃SiO_{1/2}]ₘ[(G⁰)₂SiO_{2/2}]ₙ[G⁰SiO_{3/2}]ₒ[SiO_{4/2}]ₚ[(G²)ₐ(G₁)_{a'}(Z-CO-HN-NH-CO-A)SiO_{(3-a-a')/2}]_{q} (II)
in which the symbols G⁰, G¹, G², Z, A, m, n, o, p, a, a' and q are as defined above in the key of the formula (I),
▪ in oxidizing the hydrazino group of the precursor (II) to give an azo group appropriate for the organosilicon compound (I), using an oxidizing system comprising at least one oxidant (Ox) and at least one base (B),
⇒ and this process being **characterized in that** provision is in particular made :
▪ to select the base B from inorganic bases, preferably from inorganic bases of formula (B) : M₂CO₃ in which M is a metal, preferably an alkali metal;
▪ to select Ox from the group consisting of : bromine, tert-butyl hypochlorite, trichloroisocyanuric acid, chlorine and their mixtures;
▪ and to involve an additional reactant chosen from silanes (taken alone or as a mixture between them) of formula (III) :
(G⁰)₄₋ₚ₁Si(G^{2'})ₚ₁
in which :
* the symbols G⁰, which are identical or different, each represent : a saturated or unsaturated aliphatic hydrocarbon group; a saturated or unsaturated and/or aromatic, monocyclic or polycyclic, carbocyclic group; or a group representing a saturated or unsaturated aliphatic hydrocarbon part and a carbocyclic part as defined above; or a polysiloxane residue;
* the symbols G^{2'} are identical or different and represent a hydrolysable monovalent group corresponding to the same definition as that given above for the symbols G² described in connection with the formula (I);
* p1 represents an integer chosen from 1 and 2, preferably 1.

2. Process according to Claim 1, **characterized in that** it is carried out in an anhydrous medium, preferably in organic solution.

3. Process according to Claim 1 or 2, **characterized in that** it is carried out at ambient temperature and/or at atmospheric pressure.

4. Process according to any one of Claims 1 to 3, **characterized in that** :
• the precursor (II), the base (B), the additional reactant (III), an organic solvent and an oxidant (Ox) are mixed, the oxidant preferably being gradually incorporated in the reaction medium over a few minutes to a few hours;
• reaction is allowed to take place, preferably under stirring;
• the reaction medium is filtered, the possible excess base (B) being removed by formation of a salt MOx;
• and, optionally, the reaction medium is concentrated.

5. Process according to Claim 4, **characterized in that** Ox is (are) employed in stoichiometric amounts with respect to the precursor (II).

6. Process according to Claim 4 or 5, **characterized in that** B is employed in stoichiometric amounts with respect to the amount of acid released by the reaction.

7. Process according to one at least of Claims 4 to 6, **characterized in that** the amount of additional reactant (III) employed, with respect to the precursor (II), is at least 0.1M, preferably at least 1M up to 100M or more and more preferably still is between 1 and 10M.

8. Process according to one at least of Claims 4 to 7, **characterized in that** the organosilicon compounds obtained comprise only traces of alcohol, or are even devoid of it.

9. Process according to one at least of Claims 1 to 8, **characterized in that**, prior to the oxidation of the hydrazo -HN-NH- group of the precursor of formula (II) to give an azo -N=N- group, it comprises at least the following step of synthesis of the precursor (II) : a precursor silane of formula (IV) :
[(G⁰)₃SiO_{1/2}]ₘ[(G⁰)₂SiO_{2/2}]ₙ[G⁰SiO_{3/2}]ₒ[SiO_{4/2}]ₚ[(G²)ₐ(G¹)_{a'}L¹SiO_{(3-a-a')/2}]_{q} (IV)
is reacted with a precursor hydrazo derivative of formula (V) :
L²-NH-NH-CO-A (V)
in which formulae the symbols G⁰, G¹, G², m, n, o, p, q, a, a' and A are as defined above and L¹ and L² represent groups, the structure and the functionality of which are such that these groups are capable of reacting with one another to give rise to the central link -Z-CO- so as to result in the precursor of formula (II) :
[(G⁰)₃SiO_{1/2}]m[(G⁰)₂SiO_{2/2}]ₙ[G⁰SiO_{3/2}]o[SiO_{4/2}]ₚ[(G²)ₐ(G₁)_{a'}(Z-CO-HN-NH-CO-A)SiO_{(3-a-a')/2}]_{q} (II)

10. Process according to Claim 9, **characterized in that** it is in accordance with the following general methodology :
STEP (i) :
∘ Employing precursor hydrazo derivative of formula (V) and solvent, at ambient temperature in the reactor, under an inert atmosphere.
∘ Stirring at several hundred revolutions/min and heating at T = 40-100°C.
∘ Addition of the precursor silane of formula (IV) over several tens of minutes.
∘ Reaction for several hours with stirring at T = 40-100°C before returning to ambient temperature.
∘ Resting at ambient temperature for a few hours.
∘ Recovery of solid precursor of formula (II), filtration, washing, drying.
STEP (ii) :
• Employing the precursor (II), Ox and solvent at ambient temperature in the reactor, under an inert atmosphere.
• Addition of Ox to the reactor over several tens of minutes, at a temperature of less than 30°C, preferably 25°C.
• Stirring at ambient temperature for several hours.
• Concentration.
• Recovery of a compound (I).
• Washing, filtration.
• Concentration.
